# EUROPEAN PATENT APPLICATION

(11) **EP 1 213 179 A2**
(43) Date of publication of application: **12.06.2002**
(21) Application number: 01310122.5
(22) Date of filing: 04.12.2001
(51) Int. Cl.: B60Q 1/26, B60R 1/12

(54) **System of signaling and/or illumination**

(30) Priority: 05.12.2000 US 730341
(71) Applicant: METAGAL INDUSTRIA E COMERCIO LTDA., Estado de Sao Paulo CEP:09990-090 (BR)
(72) Inventor: Miyabukuro, Pedro Takashi, Estado de Sao Paulo, CEP 09090-520 (BR)
(74) Representative: Murgatroyd, Susan Elizabeth

(57) **Abstract**

An external rearview mirror system has an external rearview mirror (20), and a device (1) for signaling and/or illumination associated with the external rearview mirror (20). The device may include a courtesy illumination (2), a turning light (3), a warning light (4), and/or a lateral repeater (5). The external rearview mirror (20) may include a mirror plate (21), a mechanism (22) for regulation of the position of the mirror plate, a housing (23) which accommodates the mirror plate (21) and the position regulating mechanism (22), and a base (24) in which the housing is set in a regulating way and which is fixed to the body of an automotive vehicle.

## Description

The present invention relates to a system of signaling and/or, illumination, and optionally auxiliary maneuver, and relates to the field of accessories of automotive vehicles.

Systems of signaling and illumination of automotive vehicles usually include lights, presence lights, lanterns and turning lights at the front end of the vehicle, lights, turning lights and brake lights in the back of the vehicle, and lateral signaling on the sides of vehicles of a larger size, such as trucks, buses, etc. On vehicles of smaller sizes, mainly in common and utility cars, lateral signaling and illumination is usually not provided.

However, the lateral signaling and illumination in automotive vehicles, even vehicles of a small size such as common and utility cars, are always desirable. There are projecting points at the sides of the automotive vehicles, such as for example rearview mirrors. Therefore, it is desirable to provide signaling, especially in view of the growing use of motorcycles which drive between the vehicles and frequently collide with the mirrors. On the sides of the vehicle there are also important points of use, such as for example access doors. It is desirable to provide illumination directly on such doors and in adjacent recesses for a higher comfort of vehicle users.

It has been difficult to arrange signaling devices and lateral illumination, particularly for vehicles of small size such as common and utility cars, mainly because of the difficulty of reconciliation of functional and aesthetic factors, taking into consideration corresponding tendencies of the vehicle designs.

Accordingly, it is an object of the present invention to provide a system of signaling and/or illumination, which is a further improvement of the existing systems.

More particularly, it is an object of the present invention to provide signaling means and lateral illumination of automotive vehicles, which operate in a corresponding functional manner and at the same time do not damage the aesthetics of the vehicle, particularly the vehicles of smaller sizes, such as common, utility and similar cars.

In keeping with these objects and with others which will become apparent hereinafter, one feature of present invention resides, briefly stated, in a combined system of signaling and/or illumination, and optionally auxiliary maneuver, which includes means provided for signaling or illumination and attached to an external rearview mirror of an automotive vehicle.

Accordingly, the present invention consists in an external rearview mirror system comprising an external rearview mirror and a device for signaling and/or illumination associated with said external rearview mirror.

The signaling and illumination means can be formed by a courtesy illumination element and/or turning light, and/or warning light, and/or lateral repeater. It is formed as a set which is originally isolated from the rearview mirror set, and then is assembled and fixed to the rearview mirror by corresponding fixation means. On the other hand, it is possible to provide integration of the signaling and illumination means in a component of the mirror set. The external rearview mirror usually is composed of a mirror plate, a regulating mechanism for positioning of the mirror plate, a housing which accommodates the mirror plate and the regulating mechanism or a part of the mechanism, and a base in which the housing is fixed to the body of the automotive vehicle. Other components can be also provided in the rearview mirror.

The combined system of signaling and/or illumination, and optionally auxiliary maneuver, provides efficient and aesthetic signaling and illumination for automotive vehicles, particularly smaller size vehicles, such as common and utility cars, when it is associated with the external rearview mirror. At the same time, it provides its function of signaling and illumination so that the external rearview mirror maintains substantially the same configuration and at the same time functions for signaling and illumination.

The system can be formed so that it is possible to mark with the signalization the rearview mirror or the lateral limits of the vehicle, that is extremely desirable, particularly in places with little light and/or at night.

On the other hand, the rearview mirror usually remains installed near the door of the vehicle, and a courtesy light is installed in the mirror and directed downwards to the region of the door and the external region adjacent to the door to illuminate the same. This provides a higher comfort to the user in getting in and out of the vehicle.

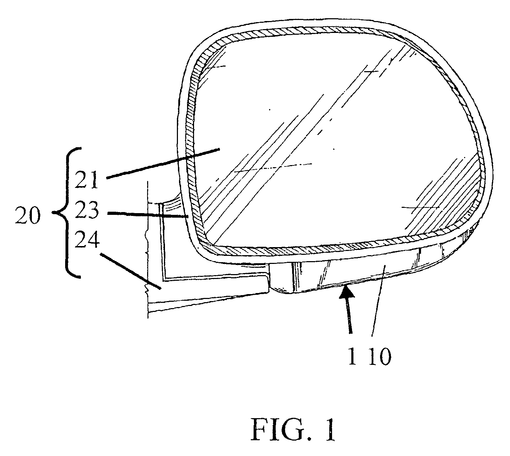

The invention will be described by way of example with reference to the accompanying drawings wherein: -
Figure 1 is a schematic front view of an external rearview mirror associated with a system for signaling and illumination in accordance with one embodiment of the present invention;

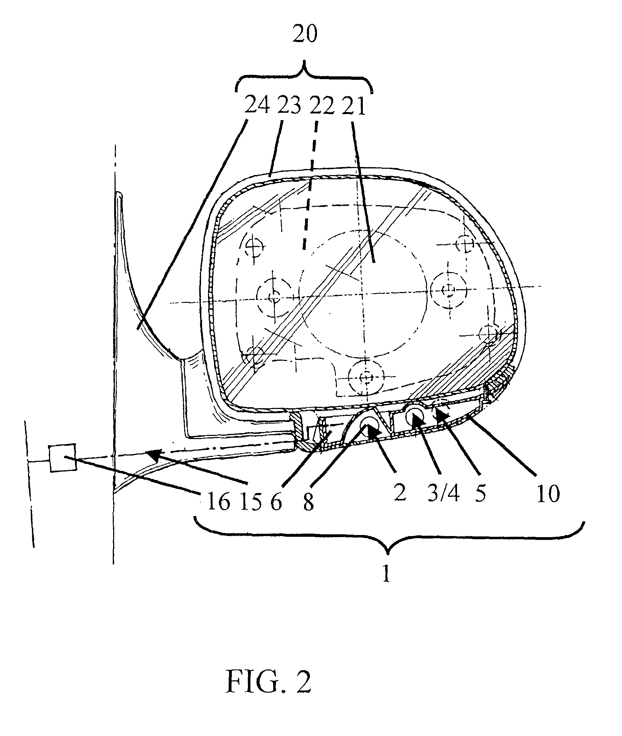

Figure 2 is a view substantially corresponding to the view of figure 1 but showing a partial section of the embodiment; and

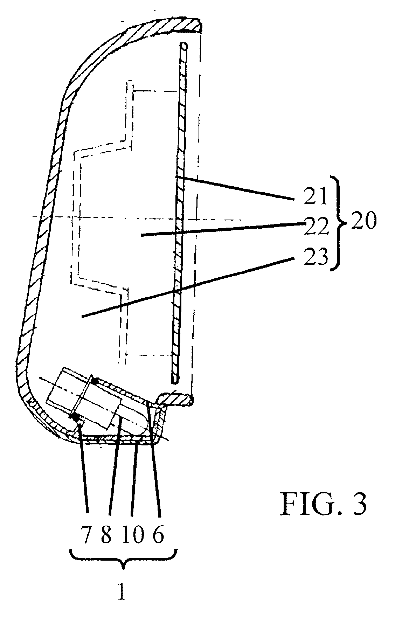

Figure 3 is a lateral view of the external rearview mirror with the present signaling and illumination system, partially sectioned.

A system for signaling and/or illumination is identified as a whole with reference numeral 1. It is associated with an external rearview mirror 20 of an automotive vehicle. Initially, the system 1 is isolated (i.e. separate) from the rearview mirror and then assembled by corresponding assembling devices. On the other hand, the system can be integrated in the rearview mirror.

The device 1 for signaling and/or illumination includes a courtesy illumination 2, a turning light 3, a warning light 4, and a lateral repeater 5. The external rearview mirror 20 includes a mirror plate 21, a mechanism 22 for regulation of the position of the mirror plate, a housing 23 which accommodates the mirror plate and the position regulating mechanism or its part that receives the mirror plate, and a base 24 in which the housing is set in a regulating way and which is fixed to the body of the automotive vehicle.

Electrical transmission means such as wires, or mechanical transmission means such as cables, connect the part of the regulating mechanism for positioning of the mirror plate to an internal part of the mechanism with relation to a cabin of the vehicle. Buttons or levers are provided for user's actuation of this mechanism.

The system 1 of signaling and/or illumination includes a base 6 which is isolated from the external rearview mirror 20 and fixed to the latter by fixing means, or sticking, or welding, or any other way. Also, the base 6 can be integrated as a sole part in an adequate component of the rearview external mirror 20, preferably in the inferior or posterior or superior region of the housing 23 or the base 24. The base 6, originally isolated or integrated in the mirror, has a configuration in the region according to the region of the housing 23 or the base 24 in which it is assembled or integrated. The base has supports 7 for receiving sets of light sources 8, surfaces of light reflection, surfaces of isolation of the sets of light sources 8 from one another, support and/or fixation surfaces of peripheral lenses with relation to the base 6. The signaling and/or illumination system 1 also has a lens 10 which covers the base 6, and a circuit 16 for electric feeding.

The set of light sources 8 can be of any known type. For example, the light sources can be incandescent lamps, discharge vapor lamps, light emission diodes, or others fixed in sockets or adequate terminals, which in turn are fixed in the supports 7 of the base 6 and connected with electric current supply wires. The light source set 8 can be formed by a light source for each courtesy function of the courtesy light 2. It can be also formed by a turning light 3, and/or a warning light 4, and/or a lateral repeater 5. Optionally, the light source set 8 can have a set for providing functioning of the courtesy light 2, an illumination source for providing warning signaling 4, a turning source 3 and/or a lateral repeater 5.

The circuit 15 of electric current supply of the device for signaling and illumination is connected to an electrical system of the vehicle. It has a usual protection device, such as a fuse and the like. It also has keys 16 for driving corresponding signaling and illumination sets, preferably located in the vehicle panel. The circuit crosses the opening of the body of the vehicle and the base 24 of the rearview mirror, enters the housing 23, and connects to the sockets or terminals of the light source set 8.

The different obligatory coloration (red or amber) of different lights for signaling can be provided with light sources having bulbs of adequate coloring and colorless transparent lens, or by parts of lenses with adequate coloring and light sources with colorless transparent bulbs.

Preferably, the optical lens 10 is designed to protect and seal the remaining components of the light device and to provide diffusion. Also, in another embodiment the optical lens 10 can have the function of protection and sealing, and also of light distribution by means of a complex surface parabola assembled together with the lens.

The entire device for signaling and/or illumination 1 can be arranged in the inferior, posterior, or superior region of the housing 23 or the base 24 of the rearview mirror, or in other positions which provide corresponding technically functional and aesthetic aspect of the set.

The external rearview mirror 20, in addition to its basic components such as the mirror 21, the regulation mechanism 22, the housing 23 and the base 24, can include other conventional devices, such as for example a safety device for disarming in response to impact, a regulation device of the housing in the base, a reversing device to be used for the left or right side.

The external rearview mirror 20 associated with the system for signaling and/or illumination according to the present invention can have any ornamental configuration which is better harmonized with design tendencies of automotive vehicles.

It will be understood that each of the elements described above, or two or more together, may also find a useful application in other types of constructions differing from the types described above.

While the invention has been illustrated and described as embodied in the combined system of signaling, illumination, and auxiliary maneuver, it is not intended to be limited to the details shown, since various modifications and structural changes may be made without departing in any way from the scope of the present invention, as defined in the appended claims.

## Claims

1. An external rearview mirror system, comprising an external rearview mirror (20); and a device (1) for signaling and/or illumination associated with said external rearview mirror (20).

2. An external rearview mirror system as claimed in claim 1, wherein said device (1) for signaling and/or illumination is formed as a device selected from the group consisting of a courtesy illumination device (2), a turning light device (3), a warning light device (4), and a lateral repeater device(5).

3. An external rearview mirror system as claimed in claim 1 or 2, wherein said external rearview mirror (20) includes a mirror plate (21), a regulation mechanism (22) for regulating a position of said mirror plate (21), a housing (23) accommodating said mirror plate (21) and said regulating mechanism (22), and a base (24) in which said housing (23) is fixed in a regulating way.

4. An external rearview mirror system as claimed in claim 3, further including transmission means selected from the group consisting of electrical transmission means and mechanical transmission means, which connect a part of said position regulation mechanism (22) to a user-activating element.

5. An external rearview mirror system as claimed in any preceding claim, wherein said signaling and/or illumination device (1) is formed so that it is originally separate from said external rearview mirror (20) and then assembled with said external rearview mirror (20).

6. An external rearview mirror system as claimed in any one of claims 1 to 4, wherein said device (1) for signaling and/or illumination and said external rearview mirror (20) are originally integrated with one another as a single part.

7. An external rearview mirror system as claimed in any preceding claim, wherein said device (1) for signaling and/or illumination is arranged in a region of said external rearview mirror (20) selected from the group consisting of an inferior region, a posterior region, and a superior region.

8. An external rearview mirror system as claimed in any preceding claim, wherein said device (1) for signaling and/or illumination includes a base (6), a set of light sources (8), a lens (10), and a circuit (15) of electrical feeding.

9. An external rearview mirror system as claimed in claim 8, wherein said base (6) is isolated from said external rearview mirror (20) and fixed on the latter.

10. An external rearview mirror system as claimed in claim 8, wherein said base (6) is integrated as a sole part in a component of said external rearview mirror (20).

11. An external rearview mirror system as claimed in claim 8, 9 or 10, wherein said base (6) includes supports (7), and light sources (8) supported by said supports (7).

12. An external rearview mirror system as claimed in claim 8,9,10 or 11, wherein said base (6) includes light reflection surfaces, isolation surfaces of said light sources (8), and support and/or fixation means for peripheral lenses.

13. An external rearview mirror system as claimed in any one of claims 8 to 12, wherein said light sources (8) are formed as light sources (8) selected from the group consisting of incandescent lamps, discharge vapor lamps, and light emitting diodes.

14. An external rearview mirror system as claimed in any one of claims 8 to 13, wherein said light sources (8) are formed as light sources selected from the group consisting of a courtesy light (2), a turning light (3), a warning light (4), and a lateral repeater (5).

15. An external rearview mirror system as claimed in any one of claims 8 to 14, wherein said light sources (8) have a source selected from the group consisting of an illumination source (2) for courtesy light function, an illumination source (4) for signaling and warning, a source (3) of turning light, and a source (5) of lateral repeater.

16. An external rearview mirror system as claimed in any one of claims 8 to 16, and further comprising means for providing a coloring of emitted light and including said light sources (8) having a corresponding coloring and colorless transparent lenses.

17. An external rearview mirror system as claimed in any one of claims 8 to 16, and further comprising means for providing coloring of emitted light and including lenses having a corresponding coloring and said light sources (8) being transparent.

18. An external rearview mirror system as claimed in any one of claims 8 to 17, wherein said optical lens (10) is formed so as to protect and seal remaining components of said device (1) for illumination and/or signaling and to provide a light diffusion.

19. An external rearview mirror system as claimed in any one of claims 8 to 18, wherein said optical lens (10) is formed so that it provides protection and sealing of components and also a light distribution by a complex surface parabola.

20. An external rearview mirror system as claimed in any preceding claim, and further comprising means for connecting said device (1) for signaling and/or illumination to an electrical system of a vehicle, and driving keys (16) for actuation of said device (1) for signaling and/or illumination.

21. An external rearview mirror system as claimed in claim 3, wherein said signaling and/or illumination device (1) has a configuration such as to form an inferior part of an element selected from the group consisting of said housing (23) and said base (24) of said external rearview mirror (20).

22. An external rearview mirror as claimed in claim 3, wherein said signaling and/or illumination device (1) has a configuration such as to form a posterior part of an element selected from the group consisting of said housing (23) and said base (24) of said external rearview mirror (20).

23. An external rearview mirror as claimed in claim 3, wherein said signaling and/or illumination device (1) has a configuration such as to form a superior part of an element selected from the group consisting of said housing (23) and said base (24) of said external rearview mirror (20).

24. An external rearview mirror as claimed in any preceding claim, wherein said signaling and/or illumination device (1) is arranged externally to said rearview mirror (20).

25. An external rearview mirror as claimed in claim 3, wherein said external rearview mirror (20) is provided with an additional means selected from the group consisting of means for disarming on impact, a regulating device for said housing (22), and a conversion device for a left side and a right side. .
